Europäisches Patentamt

European Patent Office

Office européen des brevets

(11) Publication number: **0 227 211 B1**

# EUROPEAN PATENT SPECIFICATION

(45) Date of publication of patent specification: **03.04.91**   (51) Int. Cl.⁵: **F42B 10/66, F42B 15/36**

(21) Application number: **86306764.1**

(22) Date of filing: **02.09.86**

(54) Detachable thrust vector mechanism for an aeronautical vehicle.

(30) Priority: **25.11.85 US 801445**

(43) Date of publication of application:
**01.07.87 Bulletin 87/27**

(45) Publication of the grant of the patent:
**03.04.91 Bulletin 91/14**

(84) Designated Contracting States:
**CH DE FR GB IT LI SE**

(56) References cited:
**CH-A- 480 614**     **FR-A- 1 125 143**
**FR-A- 2 511 766**     **US-A- 3 067 682**
**US-A- 3 224 370**     **US-A- 4 364 530**

(73) Proprietor: **Hughes Aircraft Company**
**7200 Hughes Terrace P.O. Box 45066**
**Los Angeles, California 90045-0066(US)**

(72) Inventor: **Peoples, John R.**
**11587 Willowood Court**
**Moorpark California 93021(US)**
Inventor: **Phillips, Billy R.**
**21910 Roscoe Boulevard**
**Canoga Park California 91304(US)**

(74) Representative: **Colgan, Stephen James et al**
**CARPMAELS & RANSFORD 43 Bloomsbury**
**Square**
**London WC1A 2RA(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to devices which enhance missile propulsion, control, and versatility, and more particularly, to a detachable thrust vector mechanism (TVM).

Most winged missiles are controlled by aerodynamic surfaces driven by hydraulic, gas pressure, motor bleed, electric, or other sources of power. As is widely known, because of low-speed during initial flight of an earth-launched missile, the aerodynamic surfaces of the missile (including its fins) have limited effectiveness in controlling the missile path.

Thrust vector control (TVC) techniques have been developed to enhance aerodynamic control during the initial launch period and have generally involved deflection or redirection of the missile exhaust flow to provide control moments. (See e.g., US-A-4,274,610, Bastian, Jan. 23, 1981). Particular TVC techniques disclosed by the prior art include use of control vanes in the exhaust, injection of a volatile fluid within the exhaust, positioning of spoiler blades across the exhaust, and gimballed thrust chambers. These techniques have the universal disadvantages of wasting part of the main rocket thrust for steerage and of requiring major modifications to the missile exhaust structure or missile body itself.

US-A-4044970 (Maudel) discloses a thrust vector mechanism for a missile having a plurality of movable fins for providing aerodynamic manoeuverability during flight and main propulsion means for providing thrust to the missile, the thrust vector mechanism comprising mounting means for connection to the missile and auxiliary propulsion means attached to the mounting means and attached to the fins for synchronized movement therewith, whereby the mechanism is operable to provide thrust and thrust vector control for the missile during an initial launch period.

Although the integrated thrust vector control system of US-A-4044970 attempted to solve certain of the above problems, the system requires a thrust vector mechanism integral to the missile fin ("tail panel") and also is designed to act in concert with the main missile propulsion system.

An alternative to the use of TVC would be to bring the missile to a very high velocity quickly so that flight aerodynamics are adequate to provide the required steerage, as in air launch applications. A negative consequence of this approach from ground launch is that the missile would rapidly achieve high elevation, and thereby experience reduced ability to hit close in targets. In addition, more boost energy would be used, and coupled with additional exhaust and possible dust clouds, the missile's signature would increase. As a result, survivability of the gunner at the point of launch would decrease.

The above problems are compounded where it is desirable to provide thrust vector control for a missile designed for a high speed boost environment (e.g., air-to-air) where it is also desirable to use such a missile in a ground launched application.

According to the present invention there is provided a thrust vector mechanism for a missile,

said missile having a plurality of moveable fins for providing aerodynamic maneuverability during flight and main propulsion means for providing thrust on the missiles,

said thrust vector mechanism comprising mounting means for connection to the missile and auxiliary propulsion means that are attached to the mounting means and attached to the fins for synchronized movement therewith, whereby the mechanism is operable to provide thrust and thrust vector control for the missile during an initial launch period, wherein

the auxiliary propulsion means comprise a plurality of rocket motors and the main propulsion means are located at the aft end of the missile,

characterised in that the auxiliary propulsion means are pivotally attached to the mounting means and in that the thrust vector mechanism is detachable and is adapted to separate automatically from the missile after the initial launch period.

According to another aspect of the present invention there is provided a missile comprising a thrust vector mechanism as herein described.

A specific embodiment of the invention is now described purely by way of example with reference to the accompanying drawings, in which:-

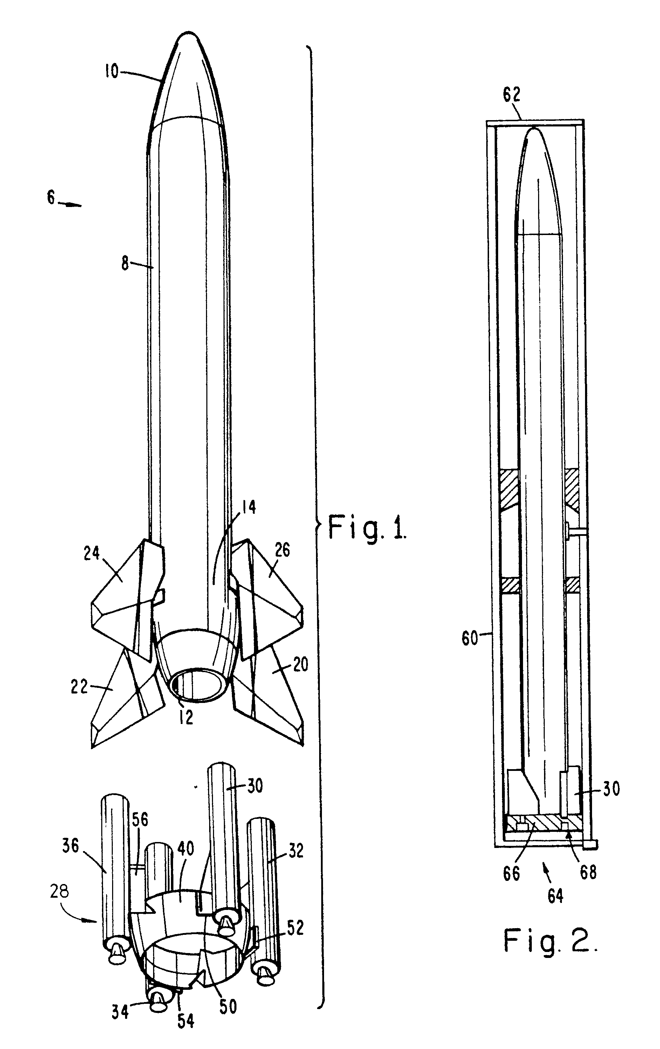

Fig. 1 is a perspective exploded view of the invention showing one embodiment which includes auxiliary motors mounted on a circular ring for positioning about a missile's aft end; and

Fig. 2 is a longitudinal cross-sectional view of the embodiment of Fig. 1 housed in a typical missile launch tube.

As shown in FIG. I, a missile (6) according to the invention comprises a cylindrical missile body (8) having the standard warhead end (10) and a propulsion end (12). The main propulsion means (14) is at the propulsion (aft) end (12) and is a main rocket engine of sufficient design for achieving air-to-air or desired surface launched missions. The missile also has control fins (20, 22, 24, 26) moved by servo-mechanisms in response to missile control circuitry which is typically a combination of hardware and software.

As shown in FIG. I, in the preferred embodiment, the detachable thrust vector mechanism (28) consists of four small motors (30, 32, 34, 36) mounted on a "C" ring (40), disposed underneath the four control fins (20, 22, 24, 26) of the missile, and connected to the fins by "V clips" (50, 52, 54, 56), although any connecting means capable of automatically disconnecting under the conditions discussed later will suffice. The motors may be further connected to each other and disposed about the missile's aft end through the use of the "C" ring (40) or other mounting means. The C ring conforms to the boattail shape of the missile's aft end. The motors are attached to the C ring by the clips so that they can swivel in a plane normal to the control surface axis. The propulsive forces produced by the motors are transferred through the swivel to the ring and into the missile boattail. The ring serves to (I) enhance proper contact between the fins and clips, (2) cause the control motors to disengage in unitary fashion, and to 3) transfer the motor force to the missile body through its aft end. The C ring "key abuts" the boattail, i.e., is in conformal (not mechanical) attachment, but is "keyed" so that it cannot rotate.

As the fins are moved through plus or minus 23°, the motors rotate through plus or minus 23° in tandem and two components of force are generated: one normal to the missile axis and one parallel to the axis. The normal force produces rolling and pitching moments for the vehicle (the primary purpose for the motors) which are used to control the vehicle attitude. The axial force produces a vehicle acceleration but more important provides the force necessary to keep the mounting ring snug against the missile boattail. The force required to rotate the motors comes from the control fins via the clip attached to the motor. The clip has a cutout compatible with the trailing edge of the control fins.

In normal operation prior to launch, the missile may be carried in a launch tube transporter (60) for land launch or sea launch. As shown in FIG. 2, the launch tube has a closed breech end (64) and a muzzle end (62). As previously stated, the TVM consists of four small micro motors attached to the missile's aft end by a C-ring or other suitable mounting means capable of automatically disconnecting. In the preferred embodiment, clips are slipped under the fins and are also pivotably connected to the C-ring so that the direction of fire of the motors will be along the as-moved axis of the fin. Initially as housed in the launch tube, the sabot (66) maintains the contact between the fins (which are folded) and the clips without further mechanical attachment, and this contact is maintained during initial launch by the upward thrust of the micro motors.

The breech end (64) of the tube (60) is closed, and contains the safe, arm, and ignition systems for the micro motors. Upon ignition, the micro motors fire and exhaust through the sabot (66) into a common chamber (68) in the breech end (64) of the tube. The exhaust pressurizes the breech end and thereby accelerates the missile out from the muzzle end (62) of the launch tube. In the preferred embodiment, the sabot (66) is designed to be trapped by the tube's muzzle end (62) as the missile exits the tube.

After the missile has travelled upward for a predetermined period, (on the order of 0.24 sec.) and has cleared the launch tube, the fins unfold. Subsequently, the fins are moved which in turn changes the direction of thrust of the small motors, which results in steerage and eventually in pitchover after approximately 0.72 seconds. The fins are aligned by servo mechanisms (not shown) which are controlled by the normal missile control circuitry which may include hardware and software.

After approximately I.32 seconds, the main motor is ignited, after which the missile picks up velocity rapidly. Sufficient control by aerodynamic action of the air on the fins is achieved on the order of I.92 seconds in the preferred embodiment. The small motors may be designed so that their propellant has burned out or nearly burned out by this time and the missile will have now achieved a velocity on order of 131 m/s (43I ft/sec). This level of main motor thrust is sufficient to accelerate the missile away from the TVM, which was being held in place at this point solely by the upward thrust of the micro motors (now almost spent) and the countervailing weight of the missile (now being rapidly overcome by the main propulsion motor). Although the C ring in the preferred embodiment is designed to be connected to, and to automatically separate from, the missile's aft end without mechanical action, it can be seen that various mounting means may be employed, for example, with a more mechanized method of attachment, or with a more elaborate electro-mechanical scenario or structure for connection and disconnection. At any rate, after the missile is beyond the initial launch phase of its flight, the TVM will become detached, and the missile may fly as in its normal operation. It can be seen that by proper design of the small motors, along with proper fin movement, initial thrust and thrust vector control can be accomplished so as to optimize the missile's attitude and downrange position at the point in time the main motor fires. In turn, such optimization minimizes the missile's inner range boundary, maximizes its corresponding outer range boundary, and decreases the initial missile signature without any major structural changes to the missile hardware itself.

**Claims**

1. A thrust vector mechanism (28) for a missile (6),

said missile (6) having a plurality of moveable fins (20,22,24,26) for providing aerodynamic maneuverability during flight and main propulsion means (14) for providing thrust on the missile (6),

said thrust vector mechanism (28) comprising mounting means (40) for connection to the missile (6) and auxiliary propulsion means (30,32,34,36) that are attached to the mounting means (40) and attached to the fins (20,22,24,26) for synchronized movement therewith, whereby the mechanism (28) is operable to provide thrust and thrust vector control for the missile (6) during an initial launch period, wherein

the auxiliary propulsion means (30,32,34,36) comprise a plurality of rocket motors and the main propulsion means (14) are located at the aft end of the missile,

characterised in that the auxiliary propulsion means are pivotably attached to the mounting means and in that the thrust vector mechanism (28) is detachable and is adapted to separate automatically from the missile (6) after the initial launch period.

2. A detachable thrust vector mechanism (28) according to claim 1 wherein:

said contact means (50,52,54 or 56) includes a V-clip adapted to receive, in its open end, the aft end of said at least one control fin (20,22,24,26).

3. A missile (6) comprising a thrust vector mechanism (28) according to any of the preceding claims.

**Revendications**

1. Mécanisme de poussée vectorielle (28) pour un missile (6), ledit missile (6) ayant plusieurs ailettes mobiles (20, 22, 24, 26) pour fournir une manoeuvrabilité aérodynamique en vol et des moyens propulsifs principaux (14) pour fournir une poussée sur le missile (6),

ledit mécanisme de poussée vectorielle (28) comprenant des moyens de montage (40) pour sa liaison au missile (6) et des moyens propulsifs auxiliaires (30, 32, 34, 36) qui sont fixés aux moyens de montage (40) et fixés aux ailettes (20, 22, 24, 26) pour un déplacement synchronisé avec celles-ci, grâce à quoi on peut actionner le mécanisme (28) pour fournir au missile (6) la poussée et la commande de poussée vectorielle pendant une période de lancement initiale,

dans lequel les moyens propulsifs auxiliaires (30, 32, 34, 36) comprennent plusieurs moteurs fusées et les moyens propulsifs principaux (14) sont situés à l'extrémité arrière du missile,

caractérisé en ce que les moyens propulsifs auxiliaires sont fixés, avec liberté de pivotement, aux moyens de montage, et en ce que le mécanisme de poussée vectorielle est largable et est conçu pour se séparer automatiquement du missile (6) après la période de lancement initiale.

2. Mécanisme de poussée vectorielle largable (28) conforme à la revendication 1 dans lequel:

lesdits moyens de contact (50, 52, 54 ou 56) comportent une pince en V adaptée pour recevoir, dans son extrémité ouverte, l'extrémité arrière d'au moins une ailette de direction (20, 22, 24, 26).

3. Missile (6) comprenant un mécanisme de poussée vectorielle (28), conforme à l'une des précédentes revendications.

**Ansprüche**

1. Ein Strahltriebwerk (28) für einen Flugkörper (6), wobei der Flugkörper (6) eine Mehrzahl von beweglichen Flossen (20, 22, 24, 26) zur Erzeugung aerodynamischer Manövrierbarkeit während des Fluges und eine Hauptantriebsvorrichtung (14) zur Erzeugung eines Schubes auf den Flugkörper (6) aufweist,

wobei das Strahltriebwerk (28) eine Befestigungsvorrichtung (40) zur Verbindung mit dem Flugkörper (6) und eine Hilfsantriebsvorrichtung (30, 32, 34, 36) aufweist, welche an der Befestigungsvorrichtung (40) befestigt und an den Flossen (20, 22, 24, 26) für eine synchrone Bewegung hiermit befestigt ist, wobei das Triebwerk (28) betreibbar ist, um Schub und Schubvektorsteuerung für den Flugkörper (6) während einer anfänglichen Abschußperiode zu erzeugen, wobei

die Hilfsantriebsvorrichtung (30, 32, 34, 36) eine Mehrzahl von Raketenmotoren umfaßt und die Hauptantriebsvorrichtung (40) am hinteren Ende des Flugkörpers angeordnet ist,

dadurch gekennzeichnet, daß

die Hilfsantriebsvorrichtung schwenkbeweglich an der Befestigungsvorrichtung angeordnet ist und daß das Strahltriebwerk (28) abwerfbar und in der Lage ist, sich automatisch von dem Flugkörper (6) nach der anfänglichen Abschußperiode zu trennen.

2.  Ein abwerfbares Strahltriebwerk (28) nach Anspruch 1, wobei eine Kontaktvorrichtung (50, 52, 54 oder 56) einen V-Clip aufweist, der an seinem offenen Ende das hintere Ende wenigstens einer Steuerflosse (20, 22, 24, 26) aufnimmt.

3.  Ein Flugkörper (6) mit einem Strahltriebwerk (28) nach einem der vorhergehenden Ansprüche.

Fig.1.

Fig. 2.